# EUROPÄISCHE PATENTSCHRIFT

(11) **EP 1 792 092 B1**
(45) Veröffentlichungstag und Bekanntmachung des Hinweises auf die Patenterteilung: **21.01.2009**
(21) Anmeldenummer: 05794753.3
(22) Anmeldetag: 21.09.2005
(51) Int. Cl.: F16C 11/06

(54) **KUGELGELENK MIT DICHTUNGSBALG**
BALL JOINT WITH A SEALING BELLOW
JOINT SPHERIQUE A SOUFFLET D'ETANCHEITE

(30) Priorität: 24.09.2004 DE 102004046676
(43) Veröffentlichungstag der Anmeldung: 06.06.2007
(73) Patentinhaber: ZF Friedrichshafen AG, 88038 Friedrichshafen (DE)
(72) Erfinder: BRÖKER, Klaus, 49163 Bohmte-Hunteburg (DE); ADAMCZYK, Dirk, 49448 Lemförde (DE)
(86) Internationale Anmeldenummer: PCT/DE2005/001664
(87) Internationale Veröffentlichungsnummer: WO 2006/032256

(56) Entgegenhaltungen:
- US-A- 2 397 464
- US-A1- 2004 101 353

## Beschreibung

Die Erfindung betrifft ein Kugelgelenk mit Dichtungsbalg nach dem Oberbegriff des Patentanspruchs 1.

Kugelgelenke der eingangs genannten Art kommen beispielsweise, jedoch keineswegs ausschließlich, am Fahrwerk bzw. an der Radaufhängung von Kraftfahrzeugen zum Einsatz.

Ein derartiges Kugelgelenk ist beispielsweise aus der US 2,397,464 bekannt. Dieses Kugelgelenk weist ein Gelenkgehäuse auf, wobei in den Innenraum des Gelenkgehäuses eine Lagerschale zur gleitbeweglichen Aufnahme einer auf einem Kugelzapfen angeordneten Gelenkkugel-Anordnung eingesetzt ist. Der Kugelzapfen ist in der üblichen Weise mit einem Anschlussbauteil, beispielsweise mit dem Hebelauge eines Lenkers am Kraftfahrzeug verbunden bzw. verschraubt.

Um das Eindringen von Feuchtigkeit und/oder Verunreinigungen in den Lagerbereich des Kugelgelenks zu vermeiden, besitzt dieses bekannte Kugelgelenk einen Dichtungsbalg aus einem Elastomermaterial, der zwei ringförmig umlaufende Anschlussbünde aufweist. Mittels eines der beiden Anschlussbünde ist der Dichtungsbalg in der üblichen Weise mit dem Rand des Gelenkgehäuses verbunden. Der andere Anschlussbund liegt in ebenfalls üblicher Weise am Hals bzw. Schaft des Kugelzapfens an.

Bei konventionellen Kugelgelenken kommt es vor, dass der Dichtungsbalg im Bereich des am Kugelzapfen anliegenden Anschlussbundes absackt bzw, seinen definierten Sitz am Kugelzapfen verlässt und sich auf das Gelenkgehäuse zu bewegt. Eine ordnungsgemäße Funktion des Dichtungsbalgs und des Kugelgelenks ist dann jedoch nicht mehr gewährleistet. Insbesondere kann der dann nicht mehr korrekt sitzende Dichtungsbalg nun zwischen dem Rand des Gelenkgehäuses und dem Kugelzapfen bzw. dem Hebelauge eingeklemmt und in der Folge beschädigt werden. Da der Anschlussbund des Dichtungsbalgs sich dann nicht mehr an seinem definierten Sitz befindet, und da der Dichtungsbalg außerdem beispielsweise nicht mehr am Hebelauge anliegt, ist zudem die Dichtwirkung des Dichtungsbalgs beeinträchtigt, und es kann zur Korrosion zunächst im Bereich des nunmehr freiliegenden Schaftbereich des Kugelzapfens mit anschließenden weiteren Undichtigkeiten zwischen Dichtungsbalg und Kugelzapfen kommen.

Aufgrund des dadurch ermöglichten Eintritts von Feuchtigkeit und Verunreinigungen in den Gelenkbereich des Kugelgelenks kommt es schließlich häufig zu erhöhtem Lagerspiel, zu korrosionsbedingter Schwergängigkeit bis hin zum Versagen des Kugelgelenks.

Gemäß der Lehre der genannten Druckschrift US 2,397,464 wird versucht, dem Problem des Absackens des am Hebelauge anliegenden bzw. zapfenseitigen Bundes des Dichtungsbalgs entgegenzuwirken, indem im Inneren des Dichtungsbalgs eine Schraubendruckfeder angeordnet wird. Die Schraubendruckfeder stützt sich mit einem Ende am Rand des Gelenkgehäuses ab, wobei das andere Ende der Schraubendruckfeder den betreffenden Anschlussbund des Dichtungsbalgs vom Gelenkgehäuse weg in Richtung auf das Hebelauge drückt.

Dabei ist jedoch zunächst einmal bereits die Anordnung der Druckfeder zwischen dem Bund des Dichtungsbalgs und dem Rand des Gelenkgehäuses nicht optimal. Denn aufgrund dieser Anordnung ist die Druckfeder gezwungen, sämtlichen Schwenkbewegungen des Kugelgelenks zu folgen, wobei lediglich in der Neutralstellung des Kugelgelenks ein umlaufend gleichmäßiger Anpressdruck der Druckfeder am Anschlussbund des Dichtungsbalgs gewährleistet ist. In allen anderen Winkelstellungen des Kugelgelenks nimmt der Anpressdruck der Druckfeder an einer Seite des Umfangs des Anschlussbunds zu, während der Anpressdruck an der jeweils gegenüberliegenden Seite des Anschlussbunds abnimmt, was wiederum die korrekte Fixierung und die Dichtigkeit des Dichtungsbalgs beeinträchtigen kann.

Insbesondere aufgrund der uneinheitlichen und schwankenden Größe des Anpressdrucks der Druckfeder am Anschlussbund des Dichtungsbalgs ist es bei der genannten Druckschrift außerdem notwendig, den entsprechenden Rand des Dichtungsbalgs eigens mit einer umlaufenden Metallhülse abzudecken und zu schützen. Dies ist einerseits aufwändig und teuer, und beeinträchtigt andererseits die Dichtungswirkung zwischen Dichtungsbalg und Kugelzapfen.

Auch wird die Druckfeder wegen der Anordnung eines ihrer Enden am Gelenkgehäuse bei jeder Bewegung des Kugelgelenks dynamisch beansprucht, was bei der Dauerfestigkeits-Dimensionierung der Druckfeder berücksichtigt werden muss und zu einer entsprechend stärker dimensionierten Druckfeder, oder aber zu entsprechenden Kostenerhöhungen aufgrund des notwendigerweise höherwertigen Materials für die Druckfeder führt. Schließlich beeinträchtigt die so angeordnete Druckfeder auch erheblich den maximal möglichen Winkelausschlag des Kugelgelenks. Denn wenn die Druckfeder einseitig auf Block gedrückt ist, kann keine weitere Winkelbewegung des Gelenkgehäuses gegenüber dem Kugelzapfen in der jeweiligen Schwenkrichtung erfolgen.

Mit diesem Hintergrund ist es Aufgabe der vorliegenden Erfindung, ein Kugelgelenk mit Dichtungsbalg zu schaffen, mit dem sich die genannten Nachteile des Standes der Technik überwinden lassen. Insbesondere soll das Kugelgelenk bei kostengünstiger Fertigung gleichzeitig selbst unter extremen klimatischen Bedingungen außerordentlich ausfallsicher sein. Dabei soll das Absacken des Dichtungsbalgs auf einfache, aber wirkungsvolle Weise dauerhaft verhindert und somit die Dichtigkeit des Dichtungsbalgs im Bereich des Kugelzapfens dauerhaft sichergestellt werden.

Diese Aufgabe wird durch ein Kugelgelenk mit den Merkmalen des Patentanspruchs 1 gelöst.

Bevorzugte Ausführungsformen sind Gegenstand der Unteransprüche.

Das erfindungsgemäße Kugelgelenk umfasst einen Dichtungsbalg und ein Gelenkgehäuse mit Lagerschale, wobei im Gelenkgehäuse bzw. in der Lagerschale die Gelenkkugel eines Kugelzapfens gleitbeweglich aufnehmbar ist. Der Kugelzapfen des Kugelgelenks weist einen Schaftbereich, einen Halsbereich und eine Kugel auf, und der Dichtungsbalg liegt mittels eines umlaufenden Abschlussbunds im Schaftbereich des Kugelzapfens an der Oberfläche des Kugelzapfens an.

Erfindungsgemäß zeichnet sich das Kugelgelenk dadurch aus, dass innerhalb des Dichtungsbalgs ein unter Vorspannung mit einer ersten Anlagefläche am Kugelzapfen und mit einer zweiten Anlagefläche mittelbar oder unmittelbar am Abschlussbund des Dichtungsbalgs sich abstützendes, in zapfenaxialer Richtung elastisches Element angeordnet ist.

Dies bedeutet mit anderen Worten, dass erfindungsgemäß ein elastisches Element, das ein Druckfederelement sein kann, vorhanden ist, das sich insbesondere jedoch nicht wie beim Stand der Technik am Rand des Gelenkgehäuses abstützt. Vielmehr ist das gesamte Druckfederelement erfindungsgemäß unmittelbar am Kugelzapfen angeordnet und stützt sich am Kugelzapfen ab.

Hiermit ist eine ganze Reihe von Vorteilen verbunden. Zunächst einmal wird auf diese Weise die dynamische Belastung des Druckfederelements vollkommen eliminiert. Das Druckfederelement ist dank der Erfindung vielmehr ausschließlich statisch vorgespannt. Mit der Erfindung ebenso beseitigt wird die ungleichmäßige Verteilung der Anpresskraft des Druckfederelements im Bereich des Anschlussbundes des Dichtungsbalgs bei unterschiedlichen Winkelstellungen des Kugelgelenks. Stattdessen bleibt die Anpresskraft des Druckfederelements auf den Anschlussbund des Dichtungsbalgs unter allen Betriebsbedingungen des Kugelgelenks gleich groß sowie gleichmäßig auf dem gesamten Umfang des Anschlussbunds verteilt. Dies kommt der Dichtigkeit des Dichtungsbalgs und damit der Lebensdauer des Kugelgelenks in vorteilhafter Weise zugute.

Außerdem ist es dank der Erfindung möglich, das Zusammenspiel der Elastizitäten des Dichtungsbalgs und des Druckfederelements bereits konstruktiv exakt dergestalt abzustimmen, dass optimale mechanische Eigenschaften des Kugelgelenks mit jeweils optimalen Dichtungseigenschaften des Dichtungsbalgs einhergehen. Insbesondere kann dem axialen Absacken des Dichtungsbalgs, bzw. dem mit der Zeit verminderten Anpressdruck der Stirnseite des Dichtungsbalgs am Hebelauge, begründet durch diverse äußere bzw. physikalische Einflüsse wie Winkelausschlag des Gelenks, Alterung, Relaxation, Temperaturwechsel, Hochdruckreiniger usw., dezidiert und konstruktiv exakt entgegengewirkt werden, indem das Druckfederelement entsprechend dimensioniert wird.

Da dank des erfindungsgemäßen Druckfederelements außerdem eine genau definierbare, konstante und rundum gleichmäßige Anpresskraft den zapfenseitigen Anschlussbund des Kugelzapfens in zapfenaxialer Richtung an das Hebelauge presst, kann die zapfenseitige Abdichtung des Dichtungsbalgs einerseits konstruktiv besser beherrscht und dimensioniert werden. Andererseits kann auf diese Weise insbesondere die axiale Stirnfläche des zapfenseitigen Abschlussbunds des Dichtungsbalgs definiert zur Dichtungsaufgabe herangezogen werden. Somit steht zur zapfenseitigen Abdichtung zwischen Dichtungsbalg und Kugelzapfen neben der radialen Anlage des zapfenseitigen Abschlussbunds am Schaft des Kugelzapfens auch und gerade die axiale Stirnfläche dieses Abschlussbunds zur Verfügung.

Diese beiden Dichtungsebenen, also die axiale Anlage des zapfenseitigen Abschlussbunds am Hebelauge und die radiale Anlage des zapfenseitigen Abschlussbunds am Kugelzapfen, ermöglichen zusammengenommen eine erheblich verbesserte Abdichtung zwischen Dichtungsbalg und Kugelzapfen. Dies gilt umso mehr, als es sich bei diesem Bereich der Dichtung eines Kugelgelenks aufgrund der hier erforderlichen Relativdrehbeweglichkeit zwischen Dichtungsbalg und Kugelzapfen um einen besonders kritischen Bereich der Dichtung handelt.

Infolge des erfindungsgemäß angeordneten Druckfederelements bleibt für die Mantelfläche des Dichtbalges außerdem nur noch die eigentliche, bestimmungsgemäße Aufgabe einer dauerhaft dichten und elastischen Verbindung der beiden Balgsitzflächen am Gelenkgehäuse und am Kugelzapfenschaft. Ohne das erfindungsgemäß angeordnete Druckfederelement muss bei den meisten aus dem Stand der Technik bekannten Kugelgelenken die zur Aufrechterhaltung der Form des Dichtungsbalgs und der Lage der Anschlussbunde notwendige Axialkraft mittels entsprechender Gestaltung der Mantelfläche des Dichtungsbalgs vom Dichtungsbalg selbst aufgebracht werden. Dies ist auch der Grund dafür, dass der Dichtungsbalg im Stand der Technik typischerweise eine Zwiebelform aufweist. Bei dieser Zwiebelform ergibt sich eine verhältnismäßig kurze Mantellänge bei relativ großem Außendurchmesser des Dichtungsbalgs.

Dieses Verhältnis lässt sich jedoch optimieren, wenn für den Dichtungsbalg die Aufgabe des Aufbringens von Axialkräften entfällt. Die Mantelfläche des Dichtungsbalgs kann dann konstruktiv sehr viel freier gestaltet werden. Beispielsweise kann eine tendenziell zylindrische Mantelform zum Einsatz kommen, wobei der Dichtungsbalg entweder bei gleichem Außendurchmesser eine größere Länge aufweist, oder aber bei gleicher Länge einen kleineren Außendurchmesser besitzt. Auf diese Weise kann die Formgebung des Dichtungsbalgs auch besser an die jeweiligen Umgebungsbedingungen und konstruktiven Anforderungen, wie beispielsweise Winkelausschlag oder Gelenkbauraum, angepasst werden.

Zudem kann aufgrund des Wegfalls der Aufgabe des Aufbringens von Axialkräften die Dicke der Mantelfläche des Dichtungsbalgs gegenüber herkömmlichen Dichtungsbälgen verringert werden. Der damit verbundene geringere Materialverbrauch stellt nicht nur einen ressourcenschonenden Umwelt- und Kostenaspekt dar. Vielmehr werden auf diese Weise auch die bei Winkelbewegung des Gelenkes auftretenden radialen Zugkräfte auf den zapfenseitigen Anschlussbund des Dichtungsbalgs reduziert. Somit lassen sich auch die im Stand der Technik bisher häufig vorkommenden starken Schwankungen der auf die radiale Dichtfläche zwischen Balg und Kugelzapfen wirkenden Kräfte verringern bzw. von den Winkelbewegungen entkoppeln, was sich wiederum positiv auf die Langlebigkeit der Dichtung und damit des gesamten Gelenkes auswirkt.

Ein weiterer Vorteil der erfindungsgemäßen Anordnung des Druckfederelements liegt darin, dass vorhandene Kugelgelenke praktisch ohne jegliche Modifikation an ihren jeweiligen Bauteilen auf die erfindungsgemäße Bauweise umgerüstet werden können. Bei einem vorhandenen Kugelgelenk wird hierzu lediglich das zusätzliche Druckfederelement in der erfindungsgemäßen Weise am Kugelzapfen angeordnet.

Dem Erfindungsgedanken folgend kann eine Weiterbildung darin bestehen, im Halsbereich des Kugelzapfens ein in zapfenaxialer Richtung elastisches Druckfederelement anzuordnen. Das Druckfederelement besitzt vorteilhafter Weise im Bereich seiner beiden Enden zwei im Wesentlichen kreisringförmige Anlageflächen, wobei sich das Druckfederelement beispielsweise mit der ersten Anlagefläche im Bereich des Übergangs zwischen Halsbereich und Kugel des Kugelzapfens abstützen kann. Mit der zweiten Anlagefläche ist eine mittelbare oder unmittelbare Abstützung am Abschlussbund des Dichtungsbalgs sinnvoll.

Für die Verwirklichung der Erfindung ist es dabei nicht erheblich, wie das Druckfederelement gestaltet und aus welchen Materialien das Druckfederelement besteht, solange das jeweilige Druckfederelement die definierte, langfristig konstante Kraftaufbringung auf den zapfenseitigen Abschlussbund des Dichtungsbalgs ermöglicht. So sind beispielsweise auch im Wesentlichen hohlzylinderförmige bzw. hohlkegelförmige Druckfederelemente aus elastischen Polymermaterialien denkbar. Gemäß einer besonders bevorzugten Ausführungsform der Erfindung ist das Druckfederelement jedoch als Stahl-Druckfeder ausgebildet.

Eine Stahl-Druckfeder kann kostengünstig mit unterschiedlichsten Eigenschaften, insbesondere jedoch mit genau spezifizierbaren Federkonstanten gefertigt werden. Weiterhin besitzt eine Druckfeder aus Stahl den großen Vorteil, dass auch langfristig praktisch keinerlei Relaxation eintritt, weshalb die konstruktiv spezifizierten Anpresskräfte und damit auch die Abdichtungseigenschaften zumindest der axialen Dichtfläche des Dichtungsbalgs über die gesamte Lebensdauer des Kugelgelenks konstant bleiben.

Die Erfindung wird auch unabhängig davon realisiert, wo genau sich das Druckfederelement mit seiner kugelseitigen Anlagefläche am Kugelzapfen abstützt, solange die Abstützung erfindungsgemäß am Kugelzapfen und nicht, wie im Stand der Technik, am Gelenkgehäuse erfolgt. So ist es beispielsweise vorstellbar, dass sich das Druckfederelement an einem ringförmig umlaufenden Bund abstützt, der im Halsbereich des Kugelzapfens angeordnet ist. Gemäß einer bevorzugten Ausführungsform der Erfindung stützt sich das Druckfederelement jedoch unmittelbar an der Gelenkkugel des Kugelzapfens ab, und zwar direkt am Übergang zwischen Halsbereich und Kugel des Kugelzapfens. Die Abstützung direkt an der Kugel ist sowohl besonders zuverlässig als auch konstruktiv besonders einfach realisierbar, da auf diese Weise keinerlei Änderungen am Kugelzapfen erforderlich sind.

Nach einer weiteren Ausführungsform der Erfindung ist zwischen der zweiten, zapfenseitigen Anlagefläche des Druckfederelements und dem Abschlussbund des Dichtungsbalgs ein Ringelement angeordnet. Besonders bevorzugt besteht dabei das Ringelement aus einem zähelastischen Material mit geringem Reibkoeffizienten, wie beispielsweise aus einem thermoplastischen Polyurethan. Ein solches Ringelement ist insbesondere dann von Vorteil, wenn das Kugelgelenk einer häufigen bzw. permanenten Drehwinkelbewegung unterliegt. In einem solchen Fall treten ggf. permanente Gleitbewegungen sowohl zwischen dem zapfenseitigen Anschlussbund des Dichtungsbalgs und dem Kugelzapfen als auch zwischen der zapfenseitigen Anlagefläche des Druckfederelements und dem zapfenseitigen Anschlussbund des Dichtungsbalgs auf.

Diese Gleitbewegungen können je nach Beschaffenheit der zapfenseitigen Anlagefläche des Druckfederelements auf Dauer zu Beschädigungen der entsprechenden Gegenfläche auf der Innenseite des Dichtungsbalgs führen. Derartige Beschädigungen lassen sich jedoch auf einfache und vorteilhafte Weise mit dem genannten Ringelement vermeiden. Zudem kann so die Leichtgängigkeit des Kugelgelenks und die Reibungsarmut zwischen dem zapfenseitigen Anschlussbund des Dichtungsbalgs und dem Kugelzapfen weiter verbessert werden.

Gemäß einer alternativen Ausführungsform der Erfindung kommt die zweite, also die zapfenseitige Anlagefläche des Druckfederelements unmittelbar am Abschlussbund des Dichtungsbalgs zur Anlage. Diese Ausführungsform zeichnet sich bei unverminderter Wirksamkeit insbesondere durch denkbar einfachste Gestaltung und damit auch durch besonders geringe Herstellungskosten aus. Einer eventuellen Abnutzung der entsprechenden Anlagefläche des Dichtungsbalgs kann in diesem Fall beispielsweise dadurch vorgebeugt werden, dass die Anlagefläche des Druckfederelements entsprechend glatt ausgeführt wird, oder aber dadurch, dass eine im Bereich des zapfenseitigen Abschlussbunds des Dichtungsbalgs möglicherweise ohnehin vorhandene einvulkanisierte Metallverstärkung des Dichtungsbalgs als Anlagefläche für das Druckfederelement mitgenutzt wird.

Gemäß weiterer Ausführungsformen der Erfindung ist im Bereich des zapfenseitigen Abschlussbunds des Dichtungsbalgs und/oder im Bereich der Anlage des Dichtungsbalgs am Gelenkgehäuse kein Spannring vorhanden. Dabei ist insbesondere die Ausführungsform ohne Spannring im Bereich des zapfenseitigen Abschlussbunds hervorzuheben. Diese Ausführungsform besitzt diverse Vorteile. So werden durch den Wegfall des Spannrings zunächst einmal sowohl Herstellungs- als auch Montagekosten eingespart. Ferner entfällt auch vollständig das Risiko einer Fehlmontage oder einer Beschädigung des Balgs bei der Montage des Spannrings, wodurch im Stand der Technik häufig noch Ausfälle von Kugelgelenken verursacht werden.

Das Kugelgelenk weist erfindungsgemäß das beschriebene Druckfederelement auf, durch welches die axiale Stirnfläche des zapfenseitigen Abschlussbunds des Dichtungsbalgs an die entsprechende Gegenoberfläche beispielsweise im Bereich des Hebelauges angepresst wird. Hierdurch lässt sich, wie bereits beschrieben, eine zusätzliche wirksame axiale Abdichtung im Bereich der Durchdringung von Kugelzapfen und Dichtungsbalg schaffen, welche die radiale Abdichtung zwischen Dichtungsbalg und Kugelzapfen entlastet. Auch dies trägt zu der mit der Erfindung gegebenen Möglichkeit eines Weglassens insbesondere des zapfenseitigen Spannrings in vorteilhafter Weise bei.

In diesem Zusammenhang ist es auch vorteilhaft, wie dies gemäß einer weiteren Ausführungsform der Erfindung vorgesehen ist, wenn die axiale Stirnfläche des zapfenseitigen Abschlussbunds des Dichtungsbalgs eine konstruktive Dichtfläche insbesondere mit einer definierten Dichtgeometrie wie beispielsweise ein Dichtlabyrinth bzw. eine oder mehrere Dichtlippen aufweist. Hierdurch wird die Dichtwirkung der axialen Anlage zwischen der Oberfläche im Bereich des Hebelauges und der axialen Stirnfläche des Dichtungsbalgs weiter verbessert und zudem konstruktiv beherrschbar bzw. gezielt beeinflussbar.

Im Folgenden wird die Erfindung anhand lediglich Ausführungsbeispiele darstellender Zeichnungen näher erläutert. Dabei zeigt:
- **Fig. 1**: in schematischer Darstellung eine erste Ausführungsform eines Kugelgelenks mit Dichtungsbalg gemäß der vorliegenden Erfindung in geschnittener Seitenansicht;
- **Fig. 2**: in einer Figur 1 entsprechenden, vergrößerten Darstellung den Bereich des Dichtungsbalgs des Kugelgelenks gemäß Figur 1;
- **Fig. 3**: in einer Figur 2 entsprechenden Darstellung und Ansicht eine weitere Ausführungsform eines erfindungsgemäßen Kugelgelenks;
- **Fig. 4**: in einer Figur 2 und 3 entsprechenden Darstellung und Ansicht eine dritte Ausführungsform eines erfindungsgemäßen Kugelgelenks;
- **Fig. 5**: in einer Figur 2 bis 4 entsprechenden Darstellung und Ansicht eine vierte Ausführungsform eines erfindungsgemäßen Kugelgelenks; und
- **Fig. 6**: in einer Figur 1 entsprechenden Darstellung und Ansicht eine fünfte Ausführungsform eines erfindungsgemäßen Kugelgelenks.

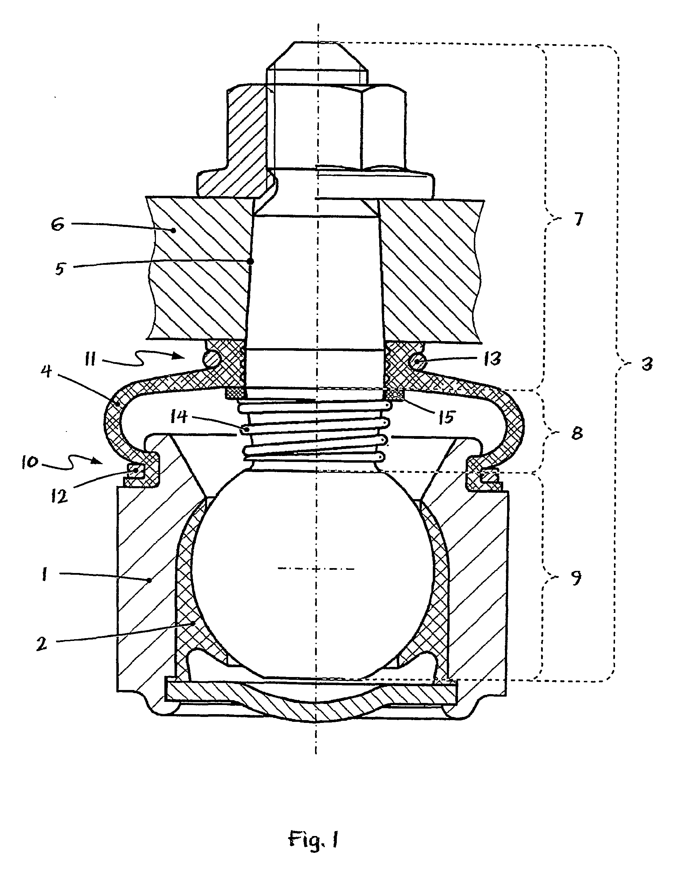

Figur 1 zeigt eine erste Ausführungsform eines erfindungsgemäßen Kugelgelenks. Man erkennt zunächst einmal die wesentlichen Bestandteile des Kugelgelenks, nämlich ein Gelenkgehäuse 1 mit darin angeordneter Lagerschale 2 sowie einen Kugelzapfen 3 und einen Dichtungsbalg 4. Im zeichnungsbezogen oberen Bereich des Kugelzapfens 3 ist der Kugelzapfen 3 beispielsweise mit dem Hebelauge 5 einer Schubstange 6 oder dergleichen verschraubt. Bei Pos. 6 kann es sich jedoch auch um ein Fahrwerksbauteil wie beispielsweise einen Querlenker oder um ein Achsbauteil wie z.B. ein Schwenklager, einen Radträger oder dergleichen handeln. Der Kugelzapfen 3 setzt sich zusammen aus Schaftbereich 7, Halsbereich 8 und Kugel 9.

Man erkennt ferner, dass der Dichtungsbalg 4 zwei Anschlussbünde 10, 11 aufweist, die die Anschlüsse des Dichtungsbalgs 4 im Bereich des Gelenkgehäuses 1 bzw. im Schaftbereich 7 des Kugelzapfens 3 bilden. Bei dem gezeigten Ausführungsbeispiel weisen die beiden Anschlussbünde 10, 11 jeweils einen Spannring 12, 13 auf, der die Eigenelastizität des Dichtungsbalgs 4 unterstützt und für einen sicheren Sitz der Anschlussbünde 10, 11 an Gelenkgehäuse 1 bzw. Kugelzapfen 3 sorgt.

Schließlich geht aus Figur 1 auch das erfindungsgemäße Druckfederelement hervor, das beim dargestellten Ausführungsbeispiel in Form einer leicht kegeligen Schraubendruckfeder 14 vorliegt. Die Schraubendruckfeder 14 stützt sich mit ihrer zeichnungsbezogen unteren Anlagefläche bzw. mit ihrem unteren Ende unmittelbar im Bereich des Übergangs zwischen Halsbereich 8 und Kugel 9 des Kugelzapfens 3 ab. Mit ihrer zeichnungsbezogen oberen Anlagefläche bzw. mit ihrem oberen Ende drückt die Schraubendruckfeder 14 gegen ein Ringelement 15, welches die Anpresskraft der Schraubendruckfeder 14 auf den zeichnungsbezogen oberen Anschlussbund 11 des Dichtungsbalgs 4 weiterleitet. Zudem schützt das Ringelement 15 den Anschlussbund 11 des Dichtungsbalgs 4 bei Relativdrehbewegungen zwischen Kugelzapfen 3 bzw. Schraubendruckfeder 14 und Dichtungsbalg 4 vor Beschädigungen durch das zeichnungsbezogen obere Ende der Schraubendruckfeder 14.

Aufgrund der Druckwirkung der Schraubendruckfeder 14 wird das Absacken des oberen Anschlussbunds 11 des Dichtungsbalgs 4 dauerhaft und mit konstruktiv exakt festlegbarer Sicherheit vermieden. Die vollständig im Inneren des Kugelgelenks liegende Schraubendruckfeder 14 ist dabei bereits optimal geschützt, und muss somit nicht gegen Korrosion oberflächenbehandelt werden, was wiederum Kosten einspart.

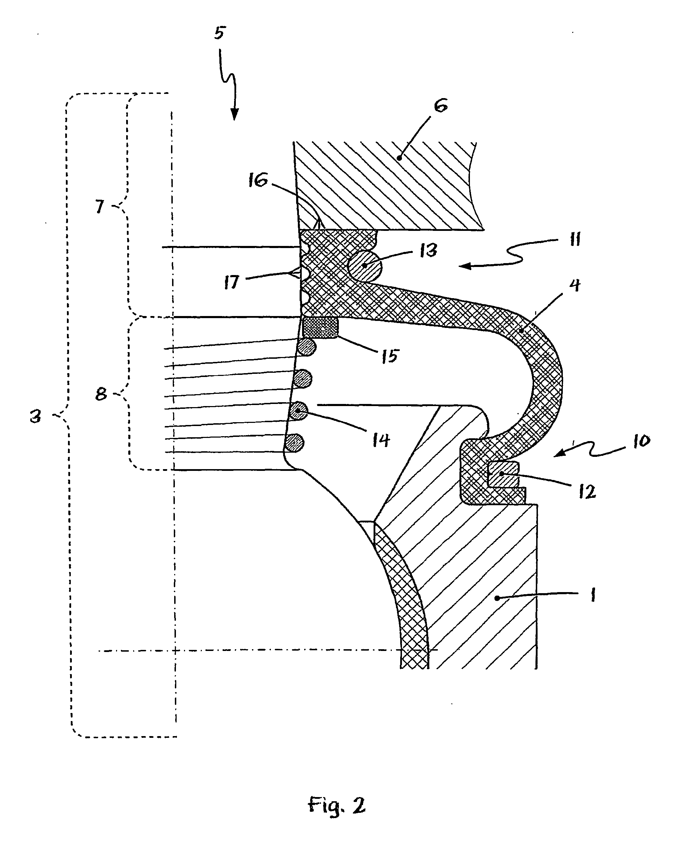

In Figur 2 ist ein vergrößerter Ausschnitt aus dem Schnitt durch das Kugelgelenk gemäß Figur 1 dargestellt. Man erkennt neben einem Teil des Kugelzapfens 3 insbesondere den mit den zwei Spannringen 12, 13 gesicherten Dichtungsbalg 4 sowie die Schraubendruckfeder 14 und das Ringelement 15. Anhand der Darstellung von Figur 2 wird auch erkennbar, dass der Anpressdruck der Schraubendruckfeder 14 im Bereich der zeichnungsbezogen oberen axialen Stirnfläche 16 des Dichtungsbalgs 4 für eine zusätzliche wirksame Abdichtung des zapfenseitigen Anschlussbunds 11 gegenüber der Schubstange 6 im Bereich des Hebelauges 5 sorgt. Auf diese Weise wird die radiale Dichtung 17 zwischen dem Anschlussbund 11 und dem Schaftbereich 7 des Kugelzapfens 3 unterstützt und entlastet.

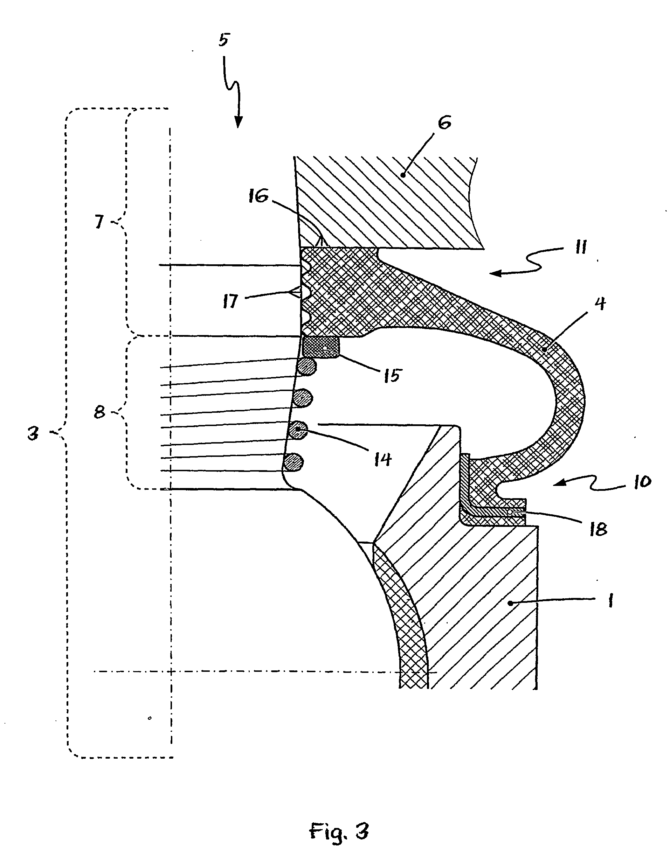

Betrachtet man nun Figur 3, so wird erkennbar, dass auch und gerade wegen des durch die Schraubendruckfeder 14 sichergestellten Anpressdrucks bei 16 auf den zapfenseitigen Anschlussbund 11 des Dichtungsbalgs 4 in vorteilhafter, weil kostensparender Weise insbesondere auf den zapfenseitigen Spannring 13 (vgl. Figur 2) verzichtet werden kann. Denn aufgrund des Anpressdrucks bildet bereits die axiale Anlagefläche 16 des Dichtungsbalgs 4 an der Oberfläche der Schubstange 6 eine definierte Dichtung, die die radiale Dichtung 17 des Anschlussbunds 11 am Schaft 37 des Kugelzapfens 3 wirksam unterstützt. Dadurch kann auf den entsprechenden Spannring 13 auch verzichtet werden, ohne dass damit im Vergleich zu einem Kugelgelenk ohne erfindungsgemäßes Druckfederelement 14 Einschränkungen der Dichtungswirkung bei 16, 17 verbunden wären.

Bei der Ausführungsform gemäß Figur 3 wurde neben dem zapfenseitigen Spannring 13 (vgl. Figur 2) ferner auch noch auf den gehäuseseitigen Spannring 12 (vgl. Figur 2) verzichtet. Dessen Aufgabe übernimmt bei der Ausführungsform gemäß Figur 3 eine in den gehäuseseitigen Anschlussbund 10 einvulkanisierte, ringförmig umlaufende Metallhülse 18. Die Metallhülse 18 sorgt für einen definierten und dauerhaft festen Sitz des gehäuseseitigen Anschlussbunds 10 am Gelenkgehäuse 1.

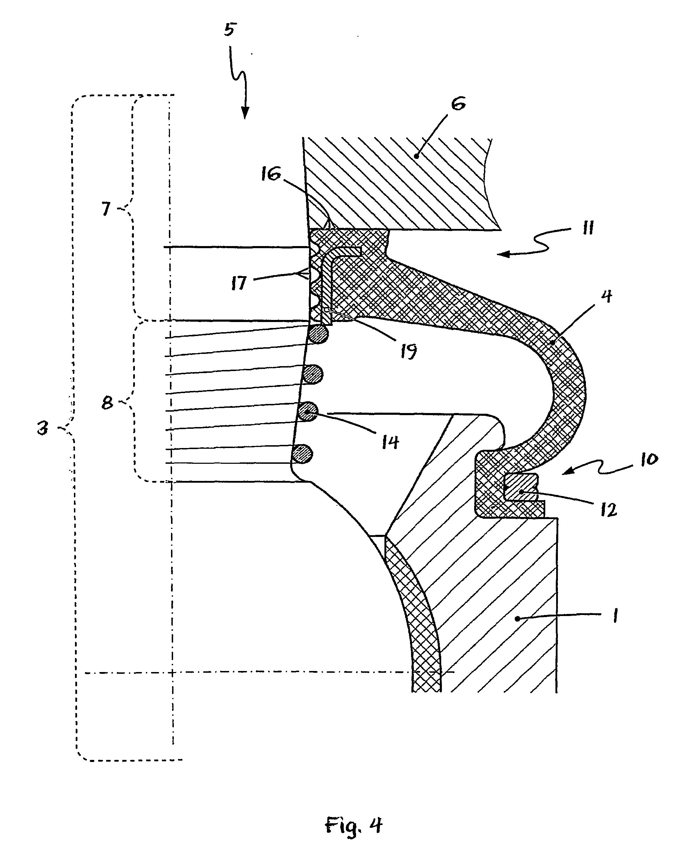

Eine bezüglich der Gestaltung der erfindungsgemäßen Druckfederanordnung noch weiter vereinfachte Ausführungsform ist in Figur 4 dargestellt. Man erkennt, dass bei der Ausführungsform gemäß Figur 4 auch noch das Ringelement 15 (vgl. Figur 3) weggelassen wurde. Damit reduzieren sich die zur Verwirklichung der Erfindung notwendigen Modifikationen am Kugelgelenk auf den zusätzlichen Einbau der Schraubendruckfeder 14. Eine ggf. bereits vorhandene, in den zapfenseitigen Anschlussbund 11 einvulkanisierte Metallhülse 19 kann dabei die Funktion des weggelassenen Ringelements 15 vollständig ersetzen, indem die Schraubendruckfeder 14 an der einvulkanisierten Metallhülse 19 anliegt.
Auch auf diese Weise werden Beschädigungen oder Abnutzungen des zapfenseitigen Anschlussbunds 11 aufgrund von Relativdrehbewegungen zwischen Kugelzapfen 3 bzw. Schraubendruckfeder 14 und Dichtungsbalgs 4 zuverlässig vermieden.

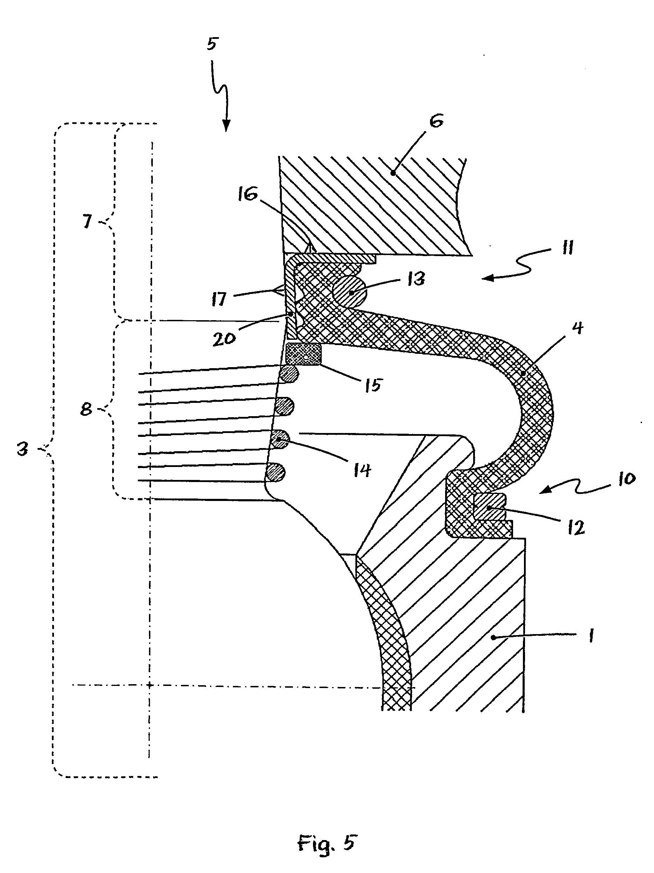

Figur 5 zeigt eine weitere Ausführungsform eines erfindungsgemäßen Kugelgelenks. Die Ausführungsform gemäß Figur 5 ist eng an die Ausführungsform gemäß Figur 2 angelehnt, und unterscheidet sich hiervon primär durch den einen L-förmigen Querschnitt aufweisenden Laufring 20. Der Laufring 20, der beispielsweise aus korrosionsbeständigem Edelstahl besteht, ist zwischen dem zapfenseitigen Dichtungsbund 11 des Dichtungsbalgs 4 und der Lageroberfläche 17 im Schaftbereich 7 des Kugelzapfens 3 bzw. im Bereich der Stirnfläche 16 am Hebelauge 5 angeordnet. Der Laufring 20 hat die Aufgabe der exakten und dabei leichtgängigen Führung des zapfenseitigen Anschlussbunds des Dichtungsbalgs. Insbesondere bei Kugelgelenken mit besonders häufigen bzw. permanenten Drehwinkelbewegungen wird dank des Laufrings 20 ein potenziell abrasives Scheuern des zapfenseitigen Anschlussbunds am Kugelzapfenschaft 17 bzw. bei 16 am Anschlussbauteil 6 verhindert. Auch hier sorgt das erfindungsgemäß angeordnete Druckfederelement 14 für eine permanente definierte axiale Anlage des Laufrings 20 am entsprechenden Widerpart, hier am Anschlussbauteil 6, beispielsweise am Hebelauge.

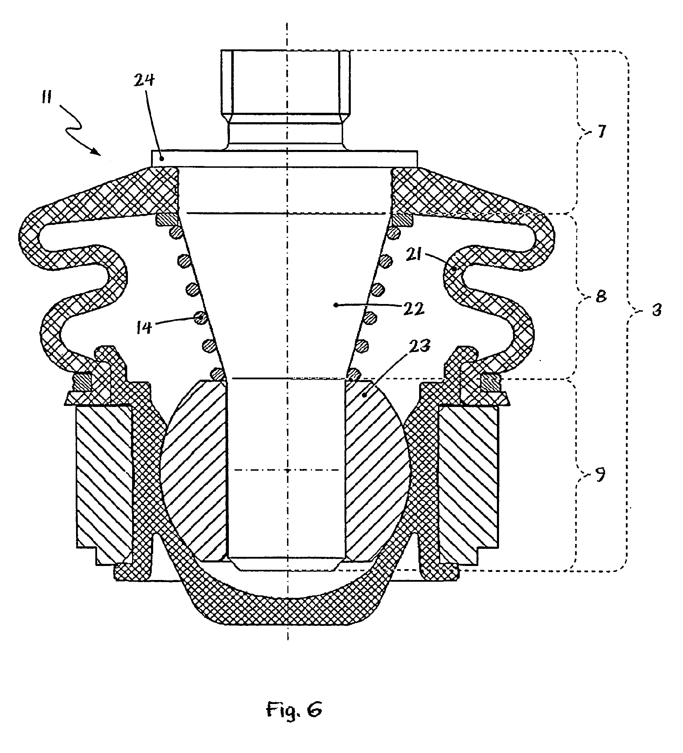

Figur 6 schließlich zeigt eine weitere Ausführungsform eines erfindungsgemäßen Kugelgelenks mit Dichtungsbalg und Druckfederelement 14. Man erkennt, dass das Kugelgelenk gemäß Figur 6 sich von dem Kugelgelenk gemäß Figur 1 insbesondere dadurch unterscheidet, dass das Kugelgelenk gemäß Figur 6 zum einen ein Faltenbalg 21 und zum anderen einen zweiteiligen Kugelzapfen 3 aufweist. Der zweiteilige Kugelzapfen 3 setzt sich aus Zapfenelement 22 und Kugelelement 23 zusammen, die miteinander verpresst sind. Gerade bei einem Faltenbalg 21 und/oder bei einem Kugelgelenk mit zweiteiligem Kugelzapfen 3 kann die Erfindung jedoch besonders vorteilhaft zur Anwendung gebracht werden.

Denn ein Faltenbalg 21 zeichnet sich einerseits durch besonders hohe Flexibilität bei besonders geringen Rückstellkräften, anderseits jedoch auch durch besonders geringe Axialkräfte aus. Daher ist es notwendig, den zapfenseitigen Anschlussbund 11 des Faltenbalgs 21 besonders wirksam und sorgfältig gegen das unerwünschte axiale Absacken am Schaft 7 bzw. Hals 8 des Kugelzapfens 3 zu sichern. Dies geschieht gemäß dem Stand der Technik zumeist in der Form, dass der zapfenseitige Anschlussbund 11 des Faltenbalgs 21 axial beidseitig durch eine bei 11 in den Schaftbereich 7 des Kugelzapfens 3 eingedrehte Nut geführt wird.

Sowohl das Anbringen der Zapfennut als auch die Montage des Anschlussbunds 11 in der Nut ist jedoch aufwändig, verursacht zusätzliche Kosten und stellt eine potenzielle Fehlerquelle bei der Herstellung dar. Dank der mit der Erfindung ermöglichten dauerhaften und exakt dimensionierbaren axialen Abstützung des zapfenseitigen Anschlussbunds 11 des Faltenbalgs 21 kann die bisher notwendige Zapfennut jedoch durch einen einfachen axialen Anschlag bzw. Absatz 24 ersetzt werden. Der axiale Absatz 24 übernimmt zusammen mit der Wirkung des Druckfederelements 14 vollständig die Aufgabe der bisher notwendigen Zapfennut.

Dies ist insbesondere bei dem in Figur 6 dargestellten Kugelgelenk mit zweiteiligem Kugelzapfen 3, 22, 23 von Vorteil. Denn dank des Ersatzes der bisher spanabhebend einzudrehenden Zapfennut durch das Zusammenwirken von axialem Absatz 24 und Druckfederelement 14 kann das Zapfenelement 22 des Kugelzapfens 3 nunmehr komplett einstückig spanlos gefertigt werden, was sowohl Herstellungskosten einspart als auch die Qualität und Belastbarkeit des Kugelzapfens 3 verbessert.

Im Ergebnis wird somit deutlich, dass dank der Erfindung die Zuverlässigkeit und Ausfallsicherheit von Kugelgelenken auf eine nachgerade überraschend elementare, einfache und kostensparende Weise verbessert werden kann. Dabei wird dank der Erfindung das Absacken des Dichtungsbalgs selbst unter extremen klimatischen Bedingungen oder bei außergewöhnlichen Belastungen, wie beispielsweise bei der Beaufschlagung mit dem Wasserstrahl eines Hochdruckreinigers, dauerhaft verhindert.

Die Erfindung leistet damit einen wesentlichen Beitrag zur Verbesserung der Wartungsfreiheit, Lebensdauer, Leichtgängigkeit und Sicherheit von Kugelgelenken, insbesondere bei anspruchsvollen Anwendungen am Kraftfahrzeug.

### Bezugszeichenliste

- 1: Gelenkgehäuse
- 2: Lagerschale
- 3: Kugelzapfen
- 4: Dichtungsbalg
- 5: Hebelauge bzw. Anschlussbauteil
- 6: Schubstange
- 7: Schaftbereich
- 8: Halsbereich
- 9: Kugel
- 10: Gehäuseseitiger Anschlussbund
- 11: Zapfenseitiger Anschlussbund
- 12: Gehäuseseitiger Spannring
- 13: Zapfenseitiger Spannring
- 14: Schraubendruckfeder
- 15: Ringelement
- 16: Stirnfläche
- 17: Radiale Dichtfläche
- 18: Metallhülse
- 19: Metallhülse
- 20: Laufring
- 21: Faltenbalg
- 22: Zapfenelement
- 23: Kugelelement
- 24: Axialer Absatz

## Patentansprüche

1. Kugelgelenk mit Dichtungsbalg (4), das Kugelgelenk umfassend ein Gelenkgehäuse (1) mit Lagerschale (2), in der die Gelenkkugel (9) eines Kugelzapfens (3) gleitbeweglich aufnehmbar ist, der Kugelzapfen (3) aufweisend einen Schaftbereich (7), einen Halsbereich (8) und eine Kugel (9), wobei der Dichtungsbalg (4) einen umlaufenden Abschlussbund (11) aufweist der mittelbar oder unmittelbar im Schaftbereich (7) des Kugelzapfens (3) anliegt,
**dadurch gekennzeichnet, dass** innerhalb des Dichtungsbalgs (4) ein unter Vorspannung mit einer ersten Anlagefläche am Kugelzapfen (3) und mit einer zweiten Anlagefläche mittelbar oder unmittelbar am Abschlussbund (11) des Dichtungsbalgs (4) sich abstützendes, in zapfenaxialer Richtung elastisches Element (14) angeordnet ist.

2. Kugelgelenk nach Anspruch 1,
**dadurch gekennzeichnet, dass** das Element (14) ein Druckfederelement ist.

3. Kugelgelenk nach Anspruch 2,
**dadurch gekennzeichnet, dass** das Druckfederelement (14) eine Schraubendruckfeder (14) aus Stahl ist.

4. Kugelgelenk nach einem der vorstehend genannten Ansprüche,
**dadurch gekennzeichnet, dass** das Element (14) im Bereich eines seiner beiden Enden jeweils eine kreisringförmige Anlagefläche aufweist.

5. Kugelgelenk nach einem der vorstehend genannten Ansprüche,
**dadurch gekennzeichnet, dass** das Element (14) mit einer seiner Anlageflächen im Bereich des Übergangs zwischen Halsbereich (8) und Kugel (9) oder unmittelbar an der Kugel (9) des Kugelzapfens (3) anliegt.

6. Kugelgelenk nach einem der vorstehend genannten Ansprüche,
**dadurch gekennzeichnet, dass** der Dichtungsbalg (4) mit dem umlaufenden Abschlussbund (11) an der Oberfläche (17) des Kugelzapfens (3) anliegt.

7. Kugelgelenk nach einem der vorstehend genannten Ansprüche,
**dadurch gekennzeichnet, dass** zwischen der zweiten Anlagefläche des Elements (14) und dem Abschlussbund (11) des Dichtungsbalgs (4) ein Ringelement (15) angeordnet ist.

8. Kugelgelenk nach Anspruch 8,
**dadurch gekennzeichnet, dass** das Ringelement (15) aus einem zähelastischen Material mit geringem Reibkoeffizienten, beispielsweise aus einem thermoplastischen Polyurethan besteht.

9. Kugelgelenk nach einem der Ansprüche 1 bis 7,
**dadurch gekennzeichnet, dass** die zweite Anlagefläche des Elements (14) unmittelbar am Abschlussbund (11) des Dichtungsbalgs (4) zur Anlage kommt.

10. Kugelgelenk nach einem der vorstehend genannten Ansprüche,
**dadurch gekennzeichnet, dass** im Bereich des Abschlussbunds (11) des Dichtungsbalgs (4) am Kugelzapfenschaft (7) und/oder im Bereich der Anlage des Dichtungsbalgs (4) am Gelenkgehäuse (1) ein Spannring (12, 13) vorhanden ist.

11. Kugelgelenk nach einem der vorstehend genannten Ansprüche,
**dadurch gekennzeichnet, dass** die Stirnfläche (16) des zapfenseitigen Abschlussbunds (11) des Dichtungsbalgs (4) eine Dichtfläche (16) aufweist.

## Claims

1. Ball joint with bellows-type seal (4), the ball joint comprising a joint housing (1) with a bearing shell (2), in which the joint ball (9) of a ball pin (3) may be accommodated with sliding movement, the ball pin (3) comprising a shank region (7), a neck region (8) and a ball (9), wherein the bellows-type seal (4) has a circumferential end collar (11) that is in abutment indirectly or directly in the shank region (7) of the ball pin (3),
**characterized in that** disposed inside the bellows-type seal (4) is an element (14) that is flexible in axial direction of the pin and supported under initial tension by a first locating face against the ball pin (3) and by a seconde locating face indirectly or directly against the end collar (11) of the bellows-type seal (4).

2. Ball joint according to claim 1,
**characterized in that** the element (14) is a compression spring element.

3. Ball joint according to claim 2,
**characterized in that** the compression spring element (14) is a helical compression spring (14) made of steel.

4. Ball joint according to one of the previously described claims,
**characterized in that** the element (14) in the region of each of its two ends has an annular locating face.

5. Ball joint according to one of the previously described claims,
**characterized in that** the element (14) rests with one of its locating faces in the region of the transition between neck region (8) and ball (9) or directly against the ball (9) of the ball pin (3).

6. Ball joint according to one of the previously described claims,
**characterized in that** the bellows-type seal (4) rests with the circumferential end collar (11) against the surface (17) of the ball pin (3).

7. Ball joint according to one of the previously described claims,
**characterized in that** disposed between the second locating face of the element (14) and the end collar (11) of the bellows-type seal (4) is a ring element (15) .

8. Ball joint according to claim 8,
**characterized in that** the ring element (15) is made from a tough resilient material with a low coefficient of friction, for example from a thermoplastic polyurethane.

9. Ball joint according to one of claims 1 to 7,
**characterized in that** the second locating face of the element (14) comes to rest directly against the end collar (11) of the bellows-type seal (4).

10. Ball joint according to one of the previously described claims,
**characterized in that** in the region of the end collar (11) of the bellows-type seal (4) on the ball pin shank (7) and/or in the region of the abutment of the bellows-type seal (4) with the joint housing (1) there is a clamping ring (12, 13).

11. Ball joint according to one of the previously described claims,
**characterized in that** the end face (16) of the pin-side end collar (11) of the bellows-type seal (4) comprises a sealing face (16).

## Revendications

1. Joint sphérique avec soufflet d'étanchéité (4), le joint sphérique comprenant un boîtier d'articulation (1) avec coquille de coussinet (2) dans laquelle la rotule de joint (9) d'un pivot à rotule (3) peut être reçu mobile à glissement, le pivot à rotule (3) comportant une zone de tige (7), une zone de col (8) et une rotule (9), le soufflet d'étanchéité (4) présentant un épaulement de fermeture (11) périphérique qui s'applique directement ou indirectement dans la zone de tige (7) du pivot à rotule (3),
**caractérisé en ce qu'**à l'intérieur du soufflet d'étanchéité (4) est disposé un élément (14) élastique dans la direction axiale du pivot, prenant appui avec précontrainte, par une première surface de contact, contre le pivot à rotule (3) et, par une seconde surface de contact, directement ou indirectement, contre l'épaulement de fermeture (11) du soufflet d'étanchéité (4).

2. Joint sphérique selon la revendication 1,
**caractérisé en ce que** l'élément (14) est un élément à ressort de pression.

3. Joint sphérique selon la revendication 2,
**caractérisé en ce que** l'élément à ressort de pression (14) est un ressort de pression hélicoïdal (14) en acier.

4. Joint sphérique selon l'une quelconque des revendications précédentes,
**caractérisé en ce que** l'élément (14) présente respectivement une surface de contact en forme d'anneau circulaire, dans la zone de l'une de ses deux extrémités.

5. Joint sphérique selon l'une quelconque des revendications précédentes,
**caractérisé en ce que** l'élément (14) s'applique, par l'une de ses surfaces de contact, dans la zone de la transition entre la zone de col (8) et la rotule (9) ou directement contre la rotule (9) du pivot à rotule (3).

6. Joint sphérique selon l'une quelconque des revendications précédentes,
**caractérisé en ce que** le soufflet d'étanchéité (4) s'applique par l'épaulement de fermeture (11) périphérique contre la surface (17) du pivot à rotule (3).

7. Joint sphérique selon l'une quelconque des revendications précédentes,
**caractérisé en ce qu'**un élément annulaire (15) est disposé entre la seconde surface de contact de l'élément (14) et l'épaulement de fermeture (11) du soufflet d'étanchéité (4).

8. Joint sphérique selon la revendication 7,
**caractérisé en ce que** l'élément annulaire (15) est constitué d'un matériau viscoélastique avec un faible coefficient de friction, par exemple d'un polyuréthane thermoplastique.

9. Joint sphérique selon l'une quelconque des revendications 1 à 7,
**caractérisé en ce que** la seconde surface de contact de l'élément (14) vient s'appliquer directement contre l'épaulement de fermeture (11) du soufflet d'étanchéité (4) .

10. Joint sphérique selon l'une quelconque des revendications précédentes,
**caractérisé en ce que** dans la zone de l'épaulement de fermeture (11) du soufflet d'étanchéité (4) sur la tige du pivot à rotule (7) il est prévu une bague de serrage (12, 13) et/ou dans la zone de contact entre le soufflet d'étanchéité (4) et le boîtier d'articulation (1).

11. Joint sphérique selon l'une quelconque des revendications précédentes,
**caractérisé en ce que** la surface frontale (16) de l'épaulement d'étanchéité (11), côté pivot, du soufflet d'étanchéité (4), présente une surface d'étanchéité (16).
